# EUROPÄISCHE PATENTANMELDUNG

(11) **EP 3 957 465 A1**
(43) Veröffentlichungstag der Anmeldung: **23.02.2022**
(21) Anmeldenummer: 20191798.6
(22) Anmeldetag: 19.08.2020
(51) Int. Cl.: B29C 64/153, B29C 64/245, B29C 64/255, B29C 64/321, B33Y 10/00, B33Y 30/00

(54) **VERFAHREN DER ADDITIVEN FERTIGUNG UND VORRICHTUNG DAFÜR**

(71) Anmelder: Peter Lehmann AG, 3552 Bärau (CH)
(72) Erfinder: HULLIGER, Urs, 4543 Deitingen (CH); LEHMANN, Hansruedi, 3532 Mirchel (CH); FRÜH, Johannes, 6923 Lauterbach (AT)
(74) Vertreter: AMMANN PATENTANWÄLTE AG

(57) **Zusammenfassung**

In einem Verfahren der additiven Fertigung, in dem das Werkstück (23) durch selektives Verfestigen von granularem Baumaterial (11) hergestellt wird, wird die benötigte schichtweise Erhöhung des Volumens des Baumaterials über einer Bauplattform (47) dadurch erzielt, dass Baumaterial (11) um den Rand der Bauplattform (47) herumströmt und damit das Volumen oberhalb der Bauplattform (47) vergrössert. Um die Fliessfähigkeit des Baumaterial (11) herzustellen, wird mittels entsprechender Generatoren (61) mechanische Schwingungsenergie in das Baumaterial (11) eingekoppelt. Alternativ oder zusätzlich ist zum Bewegen des Baumaterials eine Fördereinrichtung vorhanden. Das Verfahren benötigt insbesondere keine Dichtungen zwischen dem Rand der Bauplattform (47).

## Beschreibung

Die vorliegende Erfindung bezieht sich auf ein Verfahren gemäss Oberbegriff des Anspruchs 1. Des Weiteren bezieht sie sich auf eine Vorrichtung zur Durchführung des Verfahrens.

Bei einer Art von additivem Fertigungsverfahren wird das Werkstück auf einer Bauplattform aufgebaut, in dem über der Bauplattform aufgeschichtetes, pulverförmiges (granulares) Baumaterial selektiv erhitzt wird, wodurch die Körner des Baumaterials miteinander verbunden werden, insbesondere durch Schmelzen oder Sintern. Durch abwechselndes Aufbringen von Schichten des Baumaterials und selektives Erhitzen wird Schicht für Schicht das Werkstück gebildet. Das Aufbringen von Schichten wird bei bekannten Systemen durch Absenken der Bauplattform in einem Bauschacht in Form einer Wanne, Aufbringen von Baumaterial und Glattstreichen der Baumaterialoberfläche mit einem Rakel, in der Regel bündig mit der Oberkante des Bauschachts, realisiert. Das selektive Erhitzen geschieht in der Regel durch gerichtetes, fokussiertes Aufbringen von Strahlung, zum Beispiel als Laser mit geeigneter Wellenlänge, aber auch durch Elektronenstrahl oder durch LED's erzeugtes Licht. Die erhitzten Bereiche des Baumaterials entsprechen Querschnitten durch das Werkstück. Die Partikel werden dadurch je nachdem zusammengesintert (SLS: *Selective Laser Sintering*) oder geschmolzen (SLM: *Selective Laser Melting)* und wieder verfestigt.

Eine Vorrichtung für das SLM-Verfahren ist in der EP-A-1 234 625 beschrieben.

Bei den bekannten Systemen erstreckt sich die Bauplattform (gegebenenfalls inklusive eines Trägers) über den gesamten Querschnitt des Bauschachts. Der Bauschacht weist über die Hubhöhe, über die sich die Bauplattform während der Fertigung bewegt, einen konstanten Querschnitt auf. Gegenüber der Wand des Bauschachts ist die Bauplattform abgedichtet, um das Eindringen von Baumaterial von oberhalb der Bauplattform in den Raum unterhalb der Bauplattform zu verhindern. Diese Dichtung muss hohen Anforderungen genügen, da das Verschwinden von Baumaterial aus der Fertigungszone die Qualität der Oberfläche des Baumaterials beeinträchtigen kann, insbesondere solange sich die Fertigungszone nahe der Oberfläche der Bauplattform befindet. In späteren Phasen der Fertigung eines Werkstückes kann das Verschwinden von Baumaterial zur Ausbildung von Hohlräumen führen, die einerseits durch plötzliches Kollabieren wiederum den Fertigungsprozess stören können und andererseits unvorhergesehene Belastungen auf filigrane Strukturen nach sich ziehen können durch darauf lastendes Baumaterial, wodurch sich Verformungen oder sogar Schäden am Werkstück ergeben können.

Erschwerend tritt hinzu, dass bei der Fertigung Temperaturen von mehreren hundert Grad Celsius auftreten.

Eine Aufgabe der vorliegenden Erfindung besteht daher darin, ein Verfahren der additiven Fertigung anzugeben, bei dem das Problem der Dichtung der beweglichen Bauplattform gegenüber der Bauschachtwand entschärft ist.

Ein solches Verfahren ist im Anspruch 1 angegeben. Die weiteren Ansprüche geben bevorzugte Ausführungsformen des Verfahrens sowie Vorrichtungen zum Ausführen des Verfahrens an.

Das Verfahren zeichnet sich gemäss Anspruch 1 durch die Erkenntnis aus, dass es möglich ist, die Bauplattform in einem Reservoir von Baumaterial abzusenken. Dabei umströmt das Baumaterial ähnlich einer Flüssigkeit die absinkende Bauplattform. Um das pulverförmige Baumaterial in einen fliessförmigen Zustand zu versetzen, werden mechanische Schwingungen in das Baumaterial eingeleitet, um den Zusammenhalt zwischen den Partikeln des Baumaterials zu brechen. Eine Dichtung ist daher nicht erforderlich.

Bevorzugt wird das Gestänge, das dazu dient, die Bauplattform abzusenken bzw. anzuheben, von oben in den Bauschacht eingeführt. Dadurch ist es möglich, die Wanne des Bauschachts unten geschlossen auszuführen.

Die Erfindung wird weiter an einem bevorzugten Ausführungsbeispiel unter Bezugnahme auf Figuren erläutert. Es zeigen:
- Figur 1: Prinzip einer vorbekannten SLM-Fertigungsanlage.
- Figur 2: Schematischer vertikaler Schnitt durch ein additives Fertigungssystem.
- Figur 3: Isometrische Darstellung der Wanne einer additiven Fertigungsanlage.
- Figur 4: Schematisierter vertikaler Schnitt durch den Bauschacht gemäss Figur 3 mit Pulver.
- Figur 5: Isometrische Teilansicht durch eine additive Fertigungsanlage.
- Figur 6 - 11: Darstellung von 6 Phasen eines erfindungsgemässen additiven Fertigungsverfahrens.
- Fig. 12: Querschnitt durch eine zweite Ausführungsform

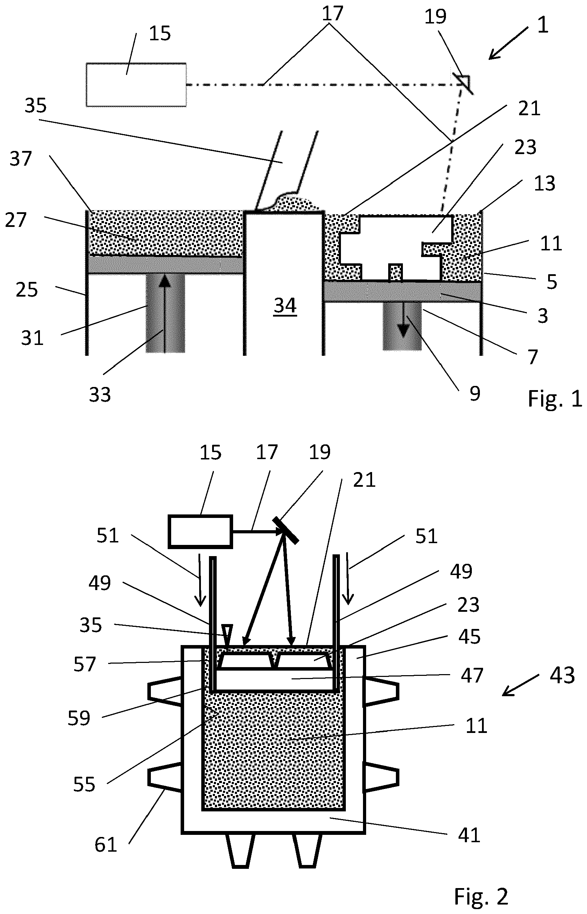

Figur 1 zeigt den prinzipiellen Aufbau einer konventionellen Anlage 1 für additive Fertigung gemäss dem SLM/SLS-Verfahren. Auf der rechten Seite ist die Bauplattform 3 zu sehen, die im Fertigungszylinder oder Bauschacht 5 vertikal verschiebbar angeordnet ist. Die Bauplattform 3 wird mittels einer Zylinderstange 7 während der Fertigung gemäss Pfeil 9 nach unten bewegt. Über der Bauplattform 3 ist Baumaterial 11 bis zur Oberkante 13 des Fertigungszylinders aufgehäuft. Ein von einem Laser 15 erzeugter Laserstrahl 17 wird von einem lenkbaren Spiegel gezielt über die Oberfläche 21 des Baumaterials 11 geführt. Die durch den Laserstrahl 17 erhitzten Partikel des Baumaterials 11 an der Oberfläche 21 verschmelzen miteinander oder sintern zusammen, um eine Schicht des Werkstücks 23 zu bilden.

Im links dargestellten Vorratszylinder 25 befindet sich loses Baumaterial 27. Es liegt auf einem Zufuhrkolben 29, der von der Zylinderstange 31 gemäss Pfeil 33 nach oben bewegt wird. Durch einen Rakel 35, der sich über Vorratszylinder 25 und Bauschacht 5 hin und her bewegt, wird über die Oberkante 37 des Vorratszylinders 25 überstehendes Baumaterial über die Trennwand 39 hinweg geschoben und damit das Baumaterial im Bauschacht 5, dessen Oberfläche 21 durch die Abwärtsbewegung 9 abgesunken ist, wieder bis zur Oberkante 13 des Fertigungszylinders 5 aufgefüllt und gleichzeitig diese Oberfläche planiert. Überschüssiges Baumaterial wird über den Fertigungszylinder 5 hinweggeschoben und gelangt in einen Auffangbehälter (nicht dargestellt).

Figur 2 zeigt einen schematischen senkrechten Schnitt durch einen Bauschacht 41 einer erfindungsgemässen Fertigungsanlage für additive Herstellung gemäss beispielsweise dem SLM- oder SLS-Verfahren. Der Fertigungszylinder 41 ist bis zu seiner Oberkante 45 mit Baumaterial 11 gefüllt. Die Bauplattform 47 ist am unteren Ende eines Hubgestänges 49 angebracht, mit dem sie während der Fertigung gemäss Pfeil 51 nach unten bewegt werden kann. Ein von einem Laser 15 erzeugter Laserstrahl 17 wird auch hier von einen Spiegel 19 über die Oberfläche 21 des Baumaterials 11 geführt, um schichtweise die Werkstücke 23 herzustellen. Im Gegensatz zur konventionellen Fertigungsanlage 1 (Figur 1) schliesst die Bauplattform 47 nicht dicht mit der Innenwand des Fertigungszylinders 41 ab, sondern zwischen der Innenwand 55 und der Aussenkante 57 der Bauplattform 47 befindet sich ein Spalt 59. Beim Absenken der Bauplattform 47 wird Baumaterial 11 unterhalb der Bauplattform 47 verdrängt und steigt über den Spalt 59 auf. Um die dafür erforderliche Fliessfähigkeit des Baumaterials 11 herzustellen, sind Schwingungsgeneratoren 61 am Fertigungszylinder 41 angebracht. Zur Herstellung einer planen Oberfläche, die für die Qualität der Werkstücke 21 Bedingung ist, wird das aufquellende Baumaterial 11 durch einen über die Oberfläche 21 hin und her fahrenden Rakel 35 geglättet.

Der Begriff "Schwingungen" schliesst auch "Vibrationen" und "Vibrieren" ein.

Zwei Vorteile sind bei dieser Konstruktion erkennbar:
A) Der Fertigungszylinder 41 bildet eine geschlossene Wanne, wodurch Abdichtungsprobleme wie bei der Anlage 1 durch die nach aussen führenden Zylinderstangen 7 vermieden werden.
B) Ein Vorratszylinder 25 mit ähnlichem Volumen wie der Fertigungszylinder 5 entfällt, da der Fertigungszylinder 41 gleichzeitig die Funktion des Vorratszylinders übernimmt. Gleichfalls entfällt ein Auffangbehälter für überschüssiges Baumaterial.

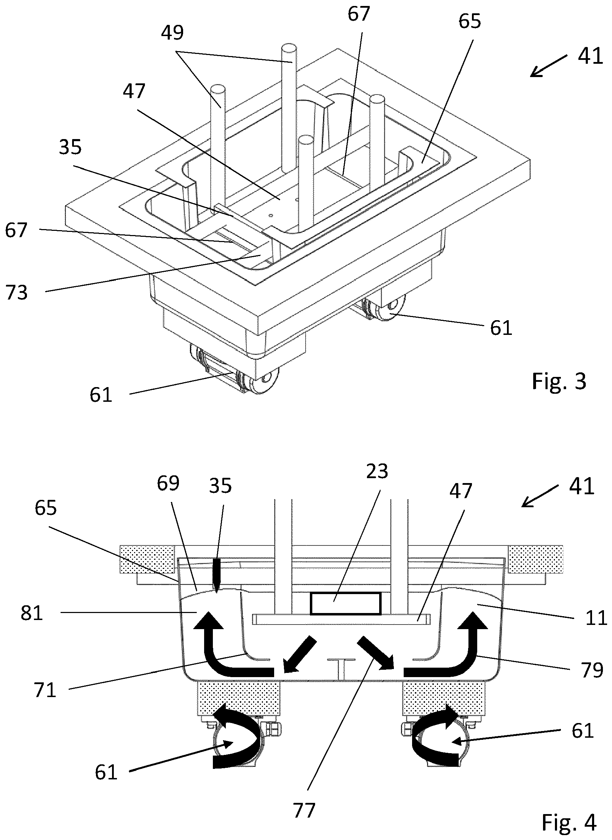

Die Figuren 3 und 4 zeigen eine bevorzugte Ausführungsform eines Fertigungszylinders 41, wobei sich in Fig. 4 Baumaterial 11 (Pulver) im Fertigungszylinder befindet. Im Innenraum des Fertigungszylinders 41 ist eine Innenwanne 65 angeordnet. Die Innenwanne 65 ist an zwei gegenüberliegenden Seiten 67 offen, das heisst, die entsprechenden Seitenwände sind nicht vorhanden. Zusätzlich ist der Boden grossflächig ausgeschnitten, so dass von der Innenwanne 65 im Wesentlichen die beiden übrigen Seitenwände 69 sowie diese verbindende Stege 71 noch vorhanden sind. Durch die offenen Seiten 67 erstrecken sich Führungsstangen 73, an denen sich der Rakel 35 über die Oberfläche der Bauplattform 47 zwischen den Hubgestängen 49 hindurch bewegt. Unten am Fertigungszylinder 41 sind Schwingungsgeneratoren 61 montiert.

Die Innenwanne 65 dient dem Zweck, die Bewegung des Baumaterials 11 während des Absenkens der Bauplattform zu den gegenüberliegenden Seiten des Fertigungszylinders 41 zu lenken, wie durch die Pfeile 77 und 79 in Figur 4 angedeutet. Das aufquellende Baumaterial 11 häuft sich daher in den beiden Endpositionen des Rakels 35 auf und kann durch die Hin-und-Her-Bewegung des Rakels 35 über der Bauplattform glatt verstrichen werden. Es hat sich auch gezeigt, dass es günstiger ist, wie hier zwei relativ grosszügig gemessene Aufstiegszonen 81 für das Baumaterial 11 vorzusehen anstelle eines umlaufenden, evtl. enger bemessenen Spalts.

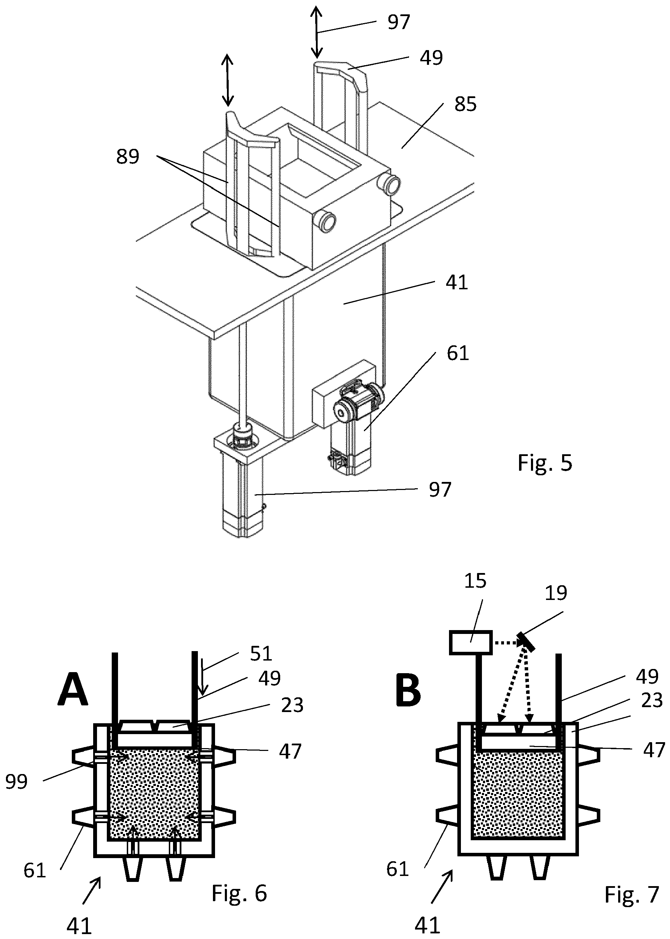

Figur 5 zeigt eine isometrische Teildarstellung einer Anlage zur additiven Fertigung, in der der Fertigungszylinder 41 in einen Bautisch 85 eingesetzt ist. Die Generatoren 61 sind hier seitlich angebracht gezeigt. Die Stangen 89 des Hubgestänges 49 sind über eine in etwa V-förmige Brücke 91 an einer Spindel 93 befestigt. Die Spindel 93 wird von einem Antrieb 95 in Bewegung gesetzt, um eine Aufwärts- oder Abwärtsbewegung gemäss Pfeilen 97 zu bewirken und damit die Bauplattform (hier nicht sichtbar) im Fertigungszylinder aufwärts und abwärts zu bewegen.

### Arbeitsweise

Figuren 6 bis 11 zeigen den Arbeitsablauf in einer solchen Fertigungsanlage.

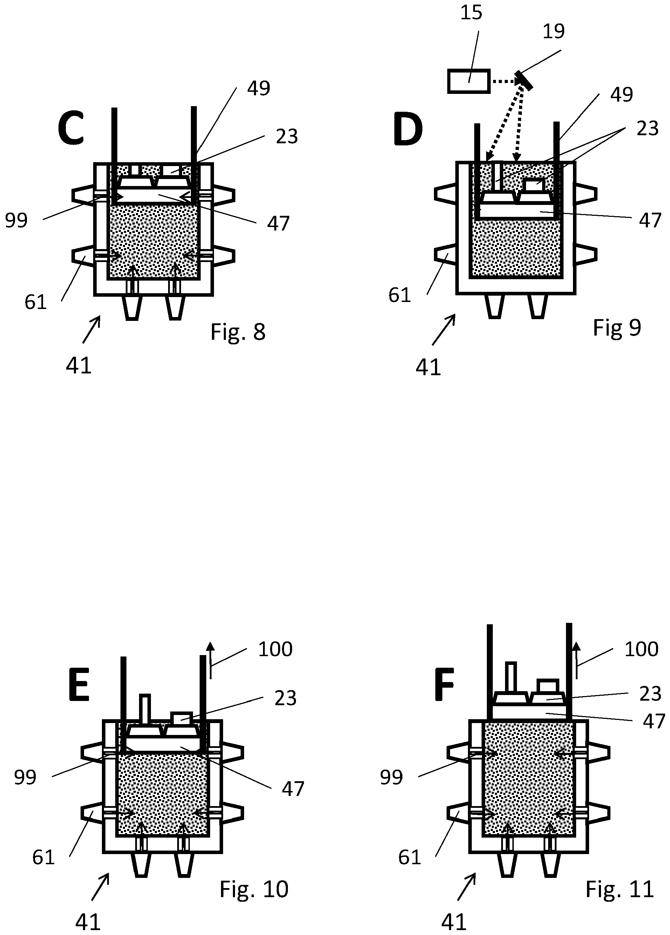

In Figur 6 sind die Schwingungsgeneratoren 61 aktiv und leiten, symbolisiert durch Pfeile 99, mechanische Schwingungsenergie in den Fertigungszylinder 41 ein. Das darin befindliche Baumaterial 11 wird dadurch in einen fliessfähigen Zustand versetzt, indem der Zusammenhalt zwischen den Partikeln des Baumaterials gelöst wird. Die Bauplattform 47 kann gemäss Pfeil 51 abgesenkt werden, wobei das Baumaterial 11 die Bauplattform 47 umfliesst. In Figur 7 ist die Bauplattform abgesenkt und steht still. Die Oberfläche des Baumaterials 11 ist planiert und die Schwingungsgeneratoren 61 sind abgeschaltet. Der Laserstrahl 17 wird durch den Spiegel 19 über die Oberfläche geführt, um gezielt Bereiche des Baumaterials 11 soweit zu erhitzen, dass sich die Partikel des Baumaterials auf bekannte Art und Weise miteinander verbinden und nach Abkühlen einen festen Körper bilden. Diese Folge von Absenken mit aktivierten Generatoren und gezieltem Erhitzen der Oberfläche wird wiederholt, so dass Schichten der Werkstücke auf der Bauplattform 47 gebildet werden. In Figuren 8 und 9 sind beispielsweise ein weiter abgesenkter Zustand der Bauplattform 47 gezeigt, wobei in Figur 8 der Zustand beim Absenken, also aktivierte Generatoren 61, gezeigt ist, während in Figur 9 die Phase des Erhitzens durch den Laserstrahl 17 gezeigt ist. Beispielhaft ist hier eine Situation gezeigt, bei der das eine Werkstück eine geringere Höhe aufweist, also bereits im Baumaterial 11 untergetaucht ist, und nur noch das links gezeigte Werkstück grösserer Bauhöhe weiter aufgebaut wird.

Sind die Werkstücke vollständig ausgebildet, so wird die Bauplattform 47 bei aktivierten Schwingungsgeneratoren 61 gemäss Pfeilen 100 nach oben bewegt, wobei das Baumaterial 11 nun um die Bauplattform 47 herum wieder nach unten in den Fertigungszylinder strömt. Durch die eingebrachte Schwingung wird gleichzeitig erreicht, dass die Werkstücke entpulvert werden, also lose anhaftendes Pulver abfliesst, abfällt und abgeschüttelt wird.

Betreffend die verwendeten Schwingungen oder Vibrationen hat sich gezeigt, dass kreisförmige oder jedenfalls Schwingungen mit einer Amplitude parallel zur Bauplattform 47 (siehe Rotationspfeile 101 in Figur 4) besser geeignet sind, das Fliessen des Baumaterials 11 wie beispielhaft mit Pfeilen 77 und 79 in Figur 4 angedeutet zu bewirken. Als gut geeignet erwiesen haben sich Frequenzen von 35 - 55 Hz. Es ist jedoch davon auszugehen, dass die Wahl der Frequenz unter anderem durch die Körnigkeit und die Struktur der Körner des Baumaterials beeinflusst wird. Zum Beispiel wird von der DE-A-102016109272 gelehrt, dass beim Entpulvern nach der Herstellung Frequenzen von 20 - 40 kHz bei Baumaterial mit relativ grossen Partikeln vorteilhaft ist, 40 - 80 kHz für Baumaterial mit kleineren Partikeln und höheren Frequenzen bis zu 2 MHz für sehr kleine Partikel oder spezielle Anwendungen eingesetzt werden können. Für vorliegende Anwendung haben sich jedoch eher niederfrequente Schwingungen/Vibrationen als wirksam erwiesen.

Die Breite und Länge des Schlitzes zwischen Bauplattform und Schachtwand insgesamt wird relativ zur Fläche der Bauplattform gewählt, um den Widerstand für das bewegte Baumaterial zu begrenzen. Diese Fläche F der Bauplattform kann mit der gesamten oberen horizontalen Oberfläche der Bauplattform gleichgesetzt werden, die mit dem Baumaterial bedeckt wird. Die gesamte Fläche des Spalts sollte nicht kleiner als 1 % der Fläche der Bauplattform sein, um dem Fliessen des Baumaterials durch den Spalt keinen zu grossen Widerstand entgegenzusetzen. Ein Maximalwert von 30 % darf angenommen werden, um noch eine wirtschaftlich sinnvolle nutzbare Fläche auf der Bauplattform zu haben. Praktische Ergebnisse ergeben eine bevorzugte Spaltfläche im Bereich 5 % bis 15 %.

### Ausführungsbeispiel 2

Ausgehend vom Prinzip, Baumaterial um die Peripherie der Bauplattform fliessen zu lassen, wird vorgeschlagen, ein Fördersystem im Bauschacht anzuordnen, das Baumaterial um die Bauplattform herum bewegt. Pulverförmiges Baumaterial, bevorzugt das gesamte für den Prozess benötigte Baumaterial, befindet sich zu Beginn im Bauschacht. Die Bauplattform wird in das Pulver abgesenkt, das gleichzeitig mit dem Fördersystem nach oben über die Bauplattform bewegt wird und in der Bauzone mit einem Rakel glattgestrichen wird.

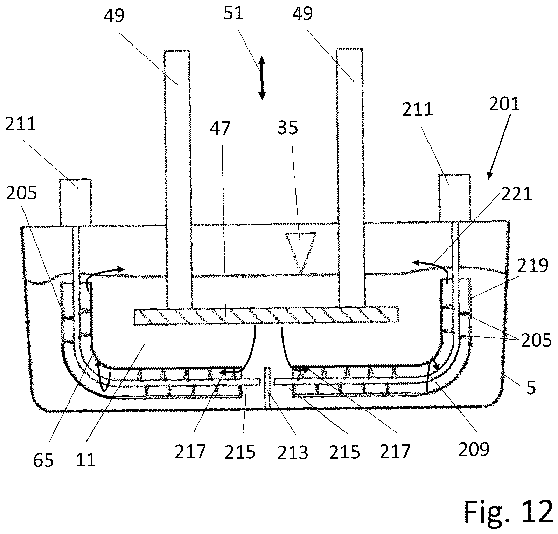

Fig. 12 zeigt einen Schnitt durch einen Fertigungsschacht 201 in einer Darstellung analog Fig. 4. Die Schwingungsgeneratoren 61 (s. Fig. 4) sind hier nicht vorhanden, dafür ein Fördersystem 203. Beispielsweise handelt es sich hier um einen Schneckenförderer 205, dessen Schnecke in einem gebogenen Rohr 207 angeordnet ist. Die Schnecke des Schneckenförderers 205 ist biegsam ausgebildet, um der Krümmung 209 des Rohrs 207 zu folgen und doch drehbar zu bleiben. Der Antrieb der Schneckenförder 205 erfolgt durch Motoren 211. Vorteilhaft hat sich das Anordnen einer Trennwand 213 zwischen den Ansaugöffnungen 215 der Schneckenförderer 205 erwiesen, um klare Rieselrichtungen 217 zu erzwingen. Das von den Schneckenförderern 205 nach oben geförderte Baumaterial 11 tritt am oberen Ende 219 gemäss Pfeilen 221 aus und bildet den Vorrat des Baumaterials, das mit dem Rakel 35 über der Bauplattform verteilt wird.

Denkbar ist, anstelle von Schneckenförderern eine andere, an sich bekannte Art von Fördereinrichtung einzusetzen. Denkbar ist z.B. auch eine Art Verteiler, der nahe dem Boden angeordnet ist, in Verbindung mit senkrecht arbeitenden Fördereinrichtungen, wodurch eine Krümmung 209 vermieden wird. Die Fördereinrichtungen transportieren Baumaterial vom Boden der Wanne 5 nach oben, während der Verteiler für die horizontale Verteilung des Baumaterials und damit ein Nachrieseln zu den Stellen bewirkt, von denen die vertikalen Förderer das Material entnehmen.

Aus der vorangehenden Beschreibung von bevorzugten Ausführungsbeispielen sind dem Fachmann zahlreiche Ergänzungen und Abwandlungen zugänglich, ohne den Schutzbereich der Erfindung zu verlassen, der durch die Ansprüche definiert ist. Denkbar ist unter anderem:
- Verwendung von anderen Schwingungsgeneratoren wie Ultraschallgeneratoren, wobei namentlich Ultraschallgeneratoren mit Piezoelementen angedacht sind, Schwingungsgeneratoren mit mechanischen Unwuchten oder elektromagnetische Schwinger, die Frequenzen in verschiedenen Bereichen von einigen Hertz aufwärts erzeugen. Bisherige Ergebnisse deuten jedoch darauf hin, dass Niederfrequenz, also generell Schwingungen am unteren hörbaren Bereich (maximal 100 Hz) und darunter die besten Ergebnisse liefert.
- Zur Erleichterung des Vorbeifliessens von Baumaterial, insbesondere beim Absenken, sind die Ränder der Bauplattform abgeschrägt, so dass sich der Randspalt zwischen Bauplattform und Innenwand des Beckens des Bauschachts nach unten, also in Richtung der Absenkbewegung, erweitert. Der Winkel zur Vertikalen ist deutlich grösser als 0°, insbesondere grösser als 10°, oder deutlich kleiner als 90°, insbesondere kleiner als 80°. Bevorzugte untere Grenzen sind 15°, 30° und 40°, bevorzugte obere Grenzen sind 75°, 60° und 50°. Entsprechende Bereiche ergeben sich aus beliebigen Kombinationen der vorgenannten Bereichsgrenzen.
- Die eingeleitete Schwingungsenergie führt, bei geeignet gewählter Frequenz und Intensität, auch zu einem selbsttätigen Einebnen der Oberfläche des Baumaterials (11). Je nach Baumaterial kann auch eine Verfestigung beobachtet werden. Je nach Anforderung kann diese Einebnungswirkung eine genügende Oberflächenglattheit gewährleisten, so dass auf den Einsatz eines Rakels verzichtet werden kann.
- Unten an der Bauplattform ist ein keilförmiges oder ähnlich gestaltetes Element angebracht bzw. die Unterseite der Bauplattform ist so ausgebildet, dass sich zu dem Randspalt bzw. den Aufstiegszonen hin eine schräg in Aufstiegsrichtung des Pulvers verlaufende Fläche ergibt. Bevorzugt ist der Winkel zur Horizontalen im Bereich 10° bis 45°, oder 15° bis 30°. Der tiefste Punkt liegt bevorzugt in der Mitte der Bauplattform, so dass die Unterseite der Bauplattform die Form eines flachen Kegels, einer flachen Pyramide oder eines zweiseitigen Keils mit First quer zur Bewegungsrichtung des Pulvers aufweist.
- Der Spalt 59,81 weist eine konstante (bevorzugt) oder variierende Breite auf.
- Der Spalt 59, 81 ist unterbrochen von Stegen, Rippen oder dergleichen. Sie können an den Wänden des Bauschachts gleiten bzw. funktional umgekehrt an den Bauschachtwänden ausgebildet sein, so dass die Bauplattform an ihnen gleitet, um die Bauplattform im Bauschacht zu führen und zu positionieren, insbesondere zu zentrieren.
- Ein oder mehrere Schwingungsgeneratoren sind an der Bauplattform angebracht alternativ oder zusätzlich zur Schwingungsgeneratorenanordnung an der Bauchschachtwand.
- Der Schneckenförderer umfasst teilweise oder insgesamt statt einer Schnecke eine Spirale, oder allgemeiner einer um seine Längsachse drehbares Förderelement mit einem sich spiralförmig um die Längsachse windenden Fördergang. Die Steigung des Fördergangs kann z.B. von 1° bis 60° betragen, oder im Bereich 15° bis 45° liegen.
- Die Prinzipien der beiden Ausführungsbeispiele sind kombiniert, also mechanische Fördereinrichtung und Schwingungsgeneratoren sind vorhanden, um gesteuerten Transport in Verbindung mit schnellerem Ausgleich des Baumaterials durch verbesserte Fliesseigenschaften zu erhalten.

## Patentansprüche

1. Verfahren zum Herstellen eines Gegenstands durch additive Fertigung, wobei über einer Bauplattform (47) ein Volumen zunehmender Höhe an granularem Baumaterial (11) erzeugt wird und in der jeweils obersten Schicht über der Bauplattform eine gesteuerte Verfestigung durchgeführt wird, **dadurch gekennzeichnet, dass** die Bauplattform in einem Volumen an Baumaterial abgesenkt wird, wobei durch mindestens eine der folgenden Massnahmen ein Transport des Baumaterials von unterhalb nach oberhalb der Bauplattform erfolgt, um die Höhe des Baumaterials über der Bauplattform zu vergrössern:
- das Baumaterial wird durch Einbringen von mechanischen Schwingungen in einen fliessfähigen Zustand versetzt;
- das Baumaterial wird mittels einer Fördereinrichtung (203) aus dem Raum unterhalb der Bauplattform in den Raum oberhalb der Bauplattform bewegt.

2. Verfahren gemäss Anspruch 1, **dadurch gekennzeichnet, dass** die mechanischen Schwingungen eine Frequenz von mindestens 10 Hz und mit zunehmender Bevorzugung mindestens 20 Hz und 30 Hz aufweisen.

3. Verfahren gemäss einem der Ansprüche 1 bis 2, **dadurch gekennzeichnet, dass** die Frequenz der mechanischen Schwingungen höchstens 1 MHz und mit steigender Bevorzugung höchstens 500 Hz, 200 Hz, 100 Hz, 70 Hz und 55 Hz beträgt.

4. Verfahren gemäss einem der Ansprüche 1 bis 3, **dadurch gekennzeichnet, dass** die Fördereinrichtung (203) ein sich um eine Längsachse drehendes Fördermittel, bevorzugt eine Schnecke oder Spirale, umfasst.

5. Vorrichtung (41) zur Durchführung des Verfahrens gemäss einem der Ansprüche 1 bis 4, **dadurch gekennzeichnet, dass** sie umfasst:
- eine Wanne (41) zur Aufnahmen von granularem Baumaterial (11), wobei die Wanne oben eine Öffnung zum Einführen der Bauplattform (47) aufweist,
- mindestens eine der folgenden Baumaterialbewegungseinrichtungen vorhanden ist:
-- a) eine Schwingungsgeneratorenanordnung mit mindestens einer Schwingungsgeneratorengruppe ausgewählt aus einer Liste aus a) mindestens einem mit der Wanne gekoppelten Generator (61) mechanischer Schwingungen und b) mindestens einem mit der Bauplattform gekoppelten Generator (61) mechanischer Schwingungen, um mechanische Schwingungen auf in der Wanne befindliches Baumaterial zur Überführung in einen fliessfähigeren Zustand zu übertragen,
-- b) eine Fördereinrichtung (203), die ausgebildet ist, dass Baumaterial vom Raum unterhalb der Bauplattform in den Raum oberhalb der Bauplattform bewegbar ist;
- eine Transporteinrichtung (49), an der die Bauplattform permanent oder lösbar angebracht ist und die von oben in die Öffnung der Wanne hinein bewegbar ist, so dass die Bauplattform in der Wanne von oben nach unten bewegbar ist.

6. Vorrichtung (41) gemäss Anspruch 5, **dadurch gekennzeichnet, dass** eine Steuerung vorhanden ist, die ausgelegt ist, die folgende Sequenz zu erzeugen:
- die Baumaterialbewegungseinrichtungen aktivieren,
- die Transportvorrichtung (49) mit der Bauplattform (47) um eine vorgegebene Distanz absenken,
- die Baumaterialbewegungseinrichtungen deaktivieren.

7. Vorrichtung (41) gemäss einem der Ansprüche 5 bis 6, **dadurch gekennzeichnet, dass** zwischen Bauplattform (47) und Wannenwand ein Spalt (59, 81) eine derartige Breite aufweist, dass verflüssigtes Baumaterial während des Absenkens der Bauplattform im Spalt aufsteigen kann.

8. Vorrichtung (41) gemäss Anspruch 7, **dadurch gekennzeichnet, dass** an mindestens einer ersten Seite, bevorzugt auch an einer zweiten, der ersten Seite gegenüberliegenden Seite der Bauplattform, der Spalt (81) ausgebildet ist und ein mindestens von der ersten Seite über die Wanne bewegbarer Rakel (35) vorhanden ist, so dass durch das Rakel das aufgestiegene Baumaterial über der Bauplattform verteilbar ist.

9. Vorrichtung (41) gemäss einem der Ansprüche 7 bis 8, **dadurch gekennzeichnet, dass** der Spalt insgesamt eine Fläche von mindestens 1 % der horizontalen Oberfläche der Bauplattform aufweist, bevorzugt höchstens 30 % und weiter bevorzugt 5 % bis 15 % davon.

10. Vorrichtung (41) gemäss einem der Ansprüche 5 bis 9, **dadurch gekennzeichnet, dass** die Fördereinrichtung (203) ein um seine Längsachse drehbares Förderelement mit entlang der Längsachse orientiertem, im wesentlichen spiralförmigem Fördergang umfasst, bevorzugt eine Förderschnecke oder eine Förderspirale, so dass durch Drehen des Förderelements um seine Längsachse eine Bewegung von Baumaterial entlang der Längsachse erzeugbar ist.

11. Vorrichtung (41) gemäss einem der Ansprüche 5 bis 10, **dadurch gekennzeichnet, dass** die Transporteinrichtung (49) einen Linearaktuator (93, 95) umfasst, dessen bewegbares Ende mit mindestens einer, bevorzugt mindestens zwei Vorschubstangen (89) verbunden ist, so dass die Vorschubstangen in die Wanne (41) hineinfahrbar sind, und dass an den Vorschubstangen die Bauplattform (47) angebracht ist.

12. Vorrichtung (41) gemäss einem der Ansprüche 6 bis 11, **dadurch gekennzeichnet, dass** die mechanischen Schwingungen im Wesentlichen parallel zur Bauplattform (47) gerichtet sind, bevorzugt mit einer kreisenden Schwingrichtung.
